# EUROPÄISCHE PATENTANMELDUNG

(11) **EP 1 342 628 A1**
(43) Veröffentlichungstag der Anmeldung: **10.09.2003**
(21) Anmeldenummer: 03001280.1
(22) Anmeldetag: 22.01.2003
(51) Int. Cl.: B60R 21/16

(54) **Gassack für ein Fahrzeuginsassen-Rückhaltesystem und Gassackmodul**

(30) Priorität: 30.01.2002 EP 02001901; 03.12.2002 DE 20218732 U
(71) Anmelder: TRW Automotive Safety Systems GmbH, 63743 Aschaffenburg (DE)
(72) Erfinder: Keutz, Markus, 64380 Rossdorf (DE)
(74) Vertreter: Strass, Jürgen

(57) **Zusammenfassung**

Ein Gassack für ein Fahrzeuginsassen-Rückhaltesystem umfaßt eine Gassackwand, welche im entfalteten Zustand des Gassacks (22) eine Einbuchtung (30) mit einer Mündung (28) oder eine Öffnung begrenzt, und ein an der Gassackwand befestigtes Verschlußteil (40), welches sich im aufgeblasenen Zustand von der Mündung (28) der Einbuchtung (30) bzw. vor die Öffnung schiebt und diese abdeckt. Das Verschlußteil (40) ist aus wenigstens zwei übereinander angeordneten, sich überlappenden Abdeckteilen gebildet, die jeweils einen nicht an der Gassackwand befestigten Randabschnitt aufweisen.

## Beschreibung

Die Erfindung betrifft einen Gassack für ein Fahrzeuginsassen-Rückhaltesystem mit einer Gassackwand, welche im entfalteten Zustand des Gassacks eine Einbuchtung mit einer Mündung oder eine Öffnung begrenzt, und einem an der Gassackwand befestigten Verschlußteil, welches sich im aufgeblasenen Zustand des Gassacks vor die Mündung der Einbuchtung bzw. vor die Öffnung schiebt und diese abdeckt. Die Erfindung betrifft ferner ein Gassackmodul mit einem erfindungsgemäßen Gassack.

Aus der EP-A-1 231 116 ist ein Gassack der eingangs genannten Art bekannt, der eine ringförmige aufzublasende Kammer hat, welche eine Einbuchtung umgibt. Die Einbuchtung erstreckt sich von der dem Fahrzeuginsassen zugewandten Vorderwand des Gassacks zentral nach hinten. Der tiefste Punkt der Einbuchtung wird durch einen Gewebeteil gebildet, das am Gassackmodul bleibend befestigt ist und somit beim Entfalten nicht in Richtung Insassen bewegt wird. Im aufgeblasenen Zustand des Gassacks deckt das an der Gassackwand befestigte Verschlußteil die Mündung der Einbuchtung ab, so daß ein Eindringen des Fahrzeuginsassen in die Einbuchtung verhindert wird.

Die Erfindung schafft einen Gassack mit einem Verschlußteil, das ein vollständiges und sicheres Abdecken einer Einbuchtung oder einer Öffnung des Gassacks gewährleistet, wobei der Gassack im zusammengefalteten Zustand eine optimierte Materialverteilung und beim Entfalten ein symmetrisches Öffnungsverhalten ermöglicht.

Dies wird bei einem Gassack der eingangs genannten Art dadurch erreicht, daß das Verschlußteil aus wenigstens zwei übereinander angeordneten, sich großflächig überlappenden Abdeckteilen gebildet ist, die jeweils einen nicht an der Gassackwand befestigten Randabschnitt aufweisen. Durch das Vorsehen von wenigstens zwei Abdeckteilen wird ein konstruktionsbedingtes unsymmetrisches Herumlegen eines einteiligen Verschlußteils um ein mittiges Halteteil des Gassackmoduls oder dergleichen vermieden. Ein solches Halteteil kann sich beim erfindungsgemäßen Gassack aufgrund der offenen Randabschnitte durch das Verschlußteil hindurch erstrecken, so daß eine symmetrische Anordnung des Verschlußteils um das Halteteil herum möglich ist. Die Belastung des Abdeckteils und des damit verbundenen Abschnitts der Gassackwand ist im Vergleich zu einem einlagigen Verschlußteil reduziert, und das Öffnungsverhalten wird nicht wie bei einem unsymmetrisch befestigten einlagigen Verschlußteil beeinflußt. Mit dem erfindungsgemäßen Verschlußteil kann neben einer durch die Gassackwand begrenzte Einbuchtung auch eine in der Gassackwand gebildete Gasaustrittsöffnung abgedeckt werden.

Die bevorzugte Ausführungsform der Erfindung sieht vor, daß die nichtbefestigten Randabschnitte versetzt zueinander angeordnet sind. Als Abdeckteile eignen sich an der Gassackwand angenähte Gewebeteile.

Eine besonders einfache und kostengünstige Herstellung wird dadurch ermöglicht, daß die Gewebeteile geringfügig versetzt zueinander angeordnet und an ihren Außenrändern mittels einer umlaufenden Naht, welche nicht alle Randabschnitte jedes einzelnen Gewebeteils erfaßt, an der Gassackwand befestigt sind. Durch die versetzte Anordnung der Gewebeteile reicht eine einzige umlaufende Naht aus, um die Gewebeteile an der Gassackwand zu befestigen und gleichzeitig die offenen Randabschnitte zu bilden, durch die sich ein Halteteil oder dergleichen erstrecken kann. Somit ist der Nähaufwand für das Verschlußteil auf ein Minimum reduziert.

Vorzugsweise sind die Abdeckteile rechteckig, und der nicht an der Gassackwand befestigte Randabschnitt des einen Abdeckteils ist entgegengesetzt zum nicht an der Gassackwand befestigten Randabschnitt des anderen Gewebeteils. Die Abdeckteile können aber auch die Form eines Dreiecks oder eines Halbmonds haben.

Die Erfindung sieht auch ein Gassackmodul mit einem Gassack nach einem der vorhergehenden Ansprüche vor, bei dem die Gassackwand einen vorderen und einen rückseitigen Wandungsabschnitt aufweist, wobei vom vorderen Wandungsabschnitt im aufgeblasenen Zustand eine Einbuchtung in Richtung zum rückseitigen Wandungsabschnitt verläuft, die dadurch gebildet ist, daß ein Teil der Gassackwand an einer ungehinderten Bewegung nach außerhalb des Moduls beim Entfalten des Gassacks gehindert wird. Bei einem solchen Gassackmodul werden mit dem erfindungsgemäßen Gassack hervorragende Rückhaltewerte erreicht.

Gemäß der bevorzugten Ausführungsform ist im Gassackmodul ein zentrisch angeordnetes Halteteil vorgesehen, das eine ringförmige Kammer zur Unterbringung des gefalteten Gassacks innenseitig begrenzt und das sich im gefalteten Zustand des Gassacks im Inneren der Einbuchtung erstreckt, wobei im gefalteten Zustand des Gassacks die nicht an der Gassackwand befestigten Randabschnitte das Halteteil umgeben, so daß sich das Halteteil durch das Verschlußteil hindurch erstreckt. Das Halteteil dient in der Regel dazu, ein Mittelstück einer Abdeckung des Moduls an einer Bewegung nach außen zu hindern. Das Halteteil erstreckt sich im gefalteten Zustand des Gassacks im Inneren der Einbuchtung, wobei sich die Einbuchtung beim Entfalten am Halteteil entlang bewegt und über eine ringförmige Austrittsöffnung das Modul verläßt.

Weitere Merkmale und Vorteile der Erfindung ergeben sich aus der nachfolgenden Beschreibung einer bevorzugten Ausführungsform und aus den nachfolgenden Zeichnungen, auf die Bezug genommen wird. In den Zeichnungen zeigen:
- Figur 1 eine Längsschnittansicht durch ein erfindungsgemäßes Gassackmodul mit einem vollständig aufgeblasenen erfindungsgemäßen Gassack; und
- Figur 2 eine Draufsicht auf den vorderen Wandungsabschnitt des Gassacks aus Figur 1.

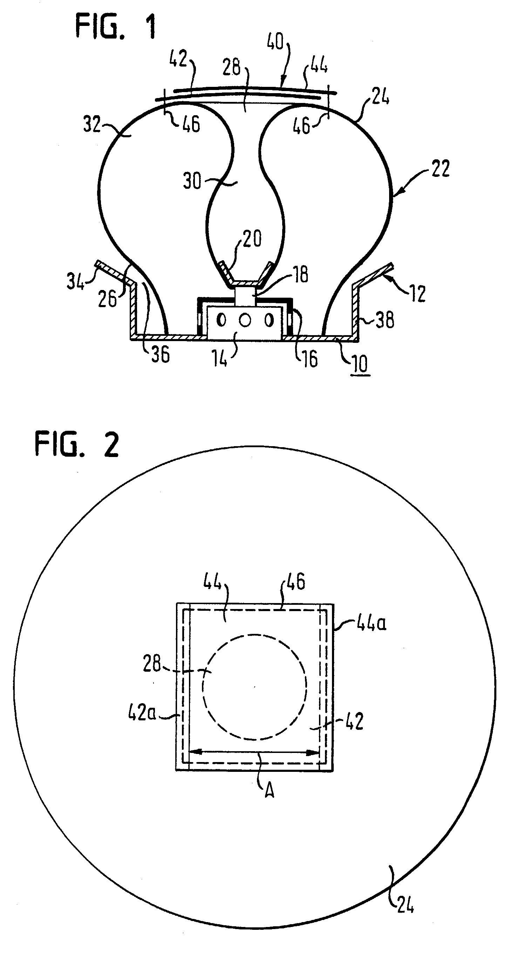

In Figur 1 ist ein Gassackmodul dargestellt, das im Lenkrad eines Fahrzeugs untergebracht werden kann. Das Gassackmodul hat ein Aufnahmegehäuse 10, das vorderseitig mit einer Abdeckung 12 geschlossen ist. Im Modul ist ein Gasgenerator 14 untergebracht, der von einem Diffusor 16 umgeben ist. Von der Stirnseite des Diffusors 16 steht ein Halteteil 18 in Form eines Rohres ab, an dem ein Mittelstück 20 der einstückigen Abdeckung 12 befestigt ist, so daß dieses beim Öffnen der Abdeckung 12 an einem Nachaußenschwenken gehindert wird.

Ein im Aufnahmegehäuse 10 des Moduls untergebrachter Gassack 22 hat eine Gassackwand, die einen vorderen, dem Insassen im aufgeblasenen Zustand zugewandten Wandungsabschnitt 24 und einen rückseitigen Wandungsabschnitt 26 umfaßt. Der vordere Wandungsabschnitt 24 hat eine zentrische Öffnung, die eine Mündung 28 einer Einbuchtung 30 bildet. Die Einbuchtung 30 entsteht dadurch, daß durch das Halteteil 18 und das Mittelstück 20 ein Teil der Gassackwand, nämlich das eigentliche Zentrum des vorderen Wandungsabschnitts 24 an einer Bewegung in Richtung zum Insassen gehindert wird. Durch die Einbuchtung 30, die nicht mit Gas befüllt wird, entsteht eine ringförmige, mit Gas zu befüllende Kammer 32.

Im gefalteten Zustand ist der Gassack 22 im Modul in einem Ringraum untergebracht, der radial innenseitig durch den Käfig 16 und das Halteteil 18 sowie außenseitig durch die Umfangswand 38 des Modulgehäuses 10 begrenzt ist. Mit 34 sind die Abschnitte der Abdeckung 12 bezeichnet, die sich beim Entfalten des Gassacks 22 vom Mittelstück 20 lösen und zur Freigabe einer ringförmigen Austrittsöffnung 36 nach außen schwenken.

Damit der Insasse, der auf den Wandungsabschnitt 24 prallt, nicht in die Einbuchtung 30 eindringen kann, hat der Gassack 22 ein Verschlußteil 40, das so angeordnet ist, daß es sich im aufgeblasenen Zustand, wie dargestellt, vor die Mündung 28 der Einbuchtung 30 schiebt und diese verschließt. Das Verschlußteil 40 besteht aus zwei übereinanderliegenden rechteckigen Abdeckteilen, die als Gewebeteile 42 und 44 ausgebildet sind und identische Form haben. Die Gewebeteile 42 und 44 sind geringfügig versetzt zueinander angeordnet, so daß sie sich mit Ausnahme von zwei entgegengesetzten Randbereichen 42a und 44a vollständig überdecken. Das Verschlußteil 40 ist mittels einer umlaufenden Naht 46 am vorderen Wandungsabschnitt 24 des Gassacks 22 befestigt, wobei die Naht 46 an den Seiten der sich nicht-überlappenden Randabschnitte 42a und 44a jeweils nur ein Gewebeteil 44 bzw. 42 und an den beiden übrigen Seiten des Verschlußteils beide Gewebeteile 42 und 44 erfaßt (siehe Figuren 1 und 2). Somit hat jedes Gewebeteil 42, 44 eine nicht-vernähte (offene) Seite, die der offenen Seite des anderen Gewebeteils entgegengesetzt ist.

Beim Einbau des Gassacks 22 in das Modul werden die beiden offenen Seiten des Verschlußteils 40 um das Halteteil 18 herumgelegt, so daß sich im zusammengefalteten Zustand des Gassacks 22 das Halteteil durch das Verschlußteil 40 hindurcherstreckt. Beim Entfalten des Gassacks 22 bewegen sich die offenen Seiten des Verschlußteils 40 am Halteteil 18 und dem Mittelstück 20 entlang und verlassen diese dann. Anschließend schieben sich die Gewebeteile 42, 44 über die Mündung 28 der Einbuchtung 30 und verschließen diese vollständig.

Der Überlappungsbereich der beiden Gewebeteile 42, 44, der bei der oben beschriebenen Ausführungsform durch das Maß A (siehe Figur 2) angegeben werden kann, ist in Abhängigkeit von der Größe der darunterliegenden abzudeckenden Mündung so groß bemessen, daß ein Durchschlagen des Fahrzeuginsassen in die Einbuchtung 30 vermieden wird.

Für das Verschlußteil 40 können anstelle von rechteckig zugeschnittenen Gewebeteilen 42, 44 auch andersförmige Gewebeteile (z.B. dreieckige oder halbmondförmige) mit entgegengesetzten offenen Seiten verwendet werden, die um das Halteteil 18 herumgelegt werden können. Der Begriff "entgegengesetzt" ist in diesem Fall so zu verstehen, daß nicht zwei gleiche Seiten der übereinanderliegenden Gewebeteile offen sind. Es ist auch möglich, ein Verschlußteil 40 mit mehr als zwei Lagen vorzusehen, wodurch die positiven Symmetrieeigenschaften des erfindungsgemäßen Abdeckkonzepts weiter verbessert werden können.

## Patentansprüche

1. Gassack für ein Fahrzeuginsassen-Rückhaltesystem, mit
einer Gassackwand, welche im entfalteten Zustand des Gassacks (22) eine Einbuchtung (30) mit einer Mündung (28) oder eine Öffnung begrenzt, und
einem an der Gassackwand befestigten Verschlußteil (40), welches sich im aufgeblasenen Zustand von der Mündung (28) der Einbuchtung (30) bzw. vor die Öffnung schiebt und diese abdeckt,
**dadurch gekennzeichnet, daß**
das Verschlußteil (40) aus wenigstens zwei übereinander angeordneten, sich überlappenden Abdeckteilen gebildet ist, die jeweils einen nicht an der Gassackwand befestigten Randabschnitt aufweisen.

2. Gassack nach Anspruch 1, **dadurch gekennzeichnet, daß** die nicht-befestigten Randabschnitte versetzt zueinander angeordnet sind.

3. Gassack nach Anspruch 1 oder 2, **dadurch gekennzeichnet, daß** die Abdeckteile an der Gassackwand angenähte Gewebeteile (42, 44) sind.

4. Gassack nach Anspruch 3, **dadurch gekennzeichnet, daß** die Gewebeteile (42, 44) geringfügig versetzt zueinander angeordnet und an ihren Außenrändern mittels einer umlaufenden Naht (46), welche nicht alle Randabschnitte jedes einzelnen Gewebeteils (42, 44) erfaßt, an der Gassackwand befestigt sind.

5. Gassack nach einem der vorhergehenden Ansprüche, **dadurch gekennzeichnet, daß** die Abdeckteile rechteckig sind und der nicht an der Gassackwand befestigte Randabschnitt des einen Abdeckteils entgegengesetzt zum nicht an der Gassackwand befestigten Randabschnitt des anderen Abdeckteils ist.

6. Gassack nach einem der Ansprüche 1 bis 4, **dadurch gekennzeichnet, daß** die Abdeckteile die Form eines Dreiecks haben.

7. Gassack nach einem der Ansprüche 1 bis 4, **dadurch gekennzeichnet, daß** die Abdeckteile die Form eines Halbmonds haben.

8. Gassackmodul mit
einem Gassack (22) nach einem der vorhergehenden Ansprüche,
**dadurch gekennzeichnet, daß**
die Gassackwand einen vorderen und einen rückseitigen Wandungsabschnitt (24 bzw. 26) aufweist,
wobei vom vorderen Wandungsabschnitt (24) im aufgeblasenen Zustand eine Einbuchtung (30) in Richtung zum rückseitigen Wandungsabschnitt 26 verläuft, die dadurch gebildet ist, daß ein Teil der Gassackwand an einer ungehinderten Bewegung nach Außerhalb des Moduls beim Entfalten des Gassacks (22) gehindert wird.

9. Gassackmodul nach Anspruch 8, **dadurch gekennzeichnet, daß** im Gassackmodul ein Halteteil (18) vorgesehen ist, das einen Ringraum zur Unterbringung des gefalteten Gassacks (22) innenseitig begrenzt und das sich im gefalteten Zustand des Gassacks (22) im Inneren der Einbuchtung (30) erstreckt, wobei im gefalteten Zustand des Gassacks (22) die nicht an der Gassackwand befestigten Randabschnitte (42a, 44a) das Halteteil (18) umgeben, so daß sich das Halteteil (18) durch das Verschlußteil (40) hindurcherstreckt.

10. Gassackmodul nach Anspruch 9, **dadurch gekennzeichnet, daß** das Verschlußteil (40) beim Entfalten des Gassacks (22) am Halteteil (18) entlang nach außen verschoben wird und sich nach dem Verlassen des Halteteils (18) über die Mündung (28) der Einbuchtung (30) bzw. die Öffnung schiebt, um diese vollständig zu verschließen.
